# EUROPÄISCHE PATENTSCHRIFT

(11) **EP 3 083 237 B1**
(45) Veröffentlichungstag und Bekanntmachung des Hinweises auf die Patenterteilung: **13.11.2019**
(21) Anmeldenummer: 14808970.9
(22) Anmeldetag: 04.12.2014
(51) Int. Cl.: B32B 7/12, B32B 27/30, B65D 77/20, C09J 153/02, B32B 27/08, B32B 27/20, B32B 27/22, B32B 27/32, C08L 53/02, C08L 91/00

(54) **MEHRSCHICHTIGE FOLIE**
MULTILAYER FILM
FILM MULTICOUCHE

(30) Priorität: 17.12.2013 DE 102013226255
(43) Veröffentlichungstag der Anmeldung: 26.10.2016
(73) Patentinhaber: Henkel AG & Co. KGaA, 40589 Düsseldorf (DE)
(72) Erfinder: HEEMANN, Marcus, 41468 Neuss (DE); KOSTYRA, Sebastian, 40789 Monheim (DE); PÜRKNER, Eckhard, 40595 Düsseldorf (DE); KASPER, Dirk, 40597 Düsseldorf (DE)
(86) Internationale Anmeldenummer: PCT/EP2014/076574
(87) Internationale Veröffentlichungsnummer: WO 2015/091000

(56) Entgegenhaltungen:
- EP-A1- 1 674 542
- WO-A1-99/20709
- WO-A1-99/28405
- US-B1- 7 442 739

## Beschreibung

Die Erfindung betrifft eine mehrschichtige Folie, die aus mindestens drei Schichten besteht, die eine äußere Schicht, eine Versiegelungsschicht und eine zwischen der äußeren Schicht und der Versiegelungsschicht liegende Schmelzhaftklebstoffschicht umfassen, wobei die Schmelzhaftklebstoffschicht einen Schmelzklebstoff enthält, hergestellt auf Basis verzweigter SIS-Copolymere mit einer Blockstruktur, die zusammen mit weiteren Zusatzstoffen Schmelzklebstoffe mit einer hohen Kälteflexibilität, guter Verbundhaftung, guten Filmbildungseigenschaften und sehr guter Verarbeitbarkeit im Extrusionsprozess ergeben. Weiterhin wird eine wiederverschließbare Verpackung, insbesondere für Lebensmittel beschrieben, die die mehrschichtige Folie enthält.

Schmelzklebstoffe, die zum Verkleben von verschiedensten Materialien geeignet sind, sind allgemein bekannt.

Die US 7,442,739 B1 offenbart Schmelzhaftklebstoffe, umfassend:
(a) etwa 10 bis etwa 50 Gew.-% mindestens eines Polymers;
(b) etwa 5 bis etwa 50 Gew.-% an Isoparaffinöl, mit amorphen Verbindungen in dem Isoparaffinöl mit einer Glasübergangstemperatur von -75°C oder weniger und wobei ein Kohlenstoff-13 NMR Spektrum des Isoparaffinöls mehr als 95 Mol-% aliphatische Kohlenstoffatome anzeigt; und
(c) etwa 30 bis etwa 65 Gew.-% mindestens eines Klebrigmachers.

In der US Patentschrift 2004/0077759 A1 werden heiß ko-extrudierbare selbstklebende Schmelzhaftklebstoffe die besonders für die Herstellung von Mehrschichtfilmen für die Verwendung in wiederverschließbaren Verpackungen geeignet sind beschrieben. Derartige Filme umfassen mindestens drei Schichten, eine erste äußere Schicht, eine Versiegelungsschicht, die die Innenseite der Verpackung definiert, und dazwischen eine wiederverschließbare Schmelzhaftklebstoffschicht. Die beschriebenen Klebstoffe enthalten klebrig machende Harze und bestimmte Styrol-Block-Copolymere in genau definierten Mengen.

Abweichend von dieser Offenbarung löst der in der mehrschichtigen Folie der Erfindung enthaltende Schmelzklebstoff die Anwendungsanforderungen auf Basis eines SIS-Polymer-Systems, das mit einem geringen Anteil an SIS an der Gesamtformulierung auskommt und weiterhin SIS-Blockpolymere mit einem Diblockanteil von unter 30 %, vorzugsweise unter 20 %, verwendet. Das beschriebene Klebstoffsystem kann durch Extrusion verarbeitet werden und lässt sich dadurch direkt im Herstellprozess von wiederverschließbaren Verpackungen integrieren.

Bei wiederverschließbaren Verpackungen spielt der Klebstoff eine wichtige Rolle insofern, da die Qualität des Wiederverschlusses und des erneuten Öffnens ganz wesentlich von den Klebstoffeigenschaften abhängen. Dieser muss selbstklebend sein, d.h. die Klebrigkeit wird durch einfaches manuelles Andrücken erzielt. Diese Klebstoffe sind als PSA (pressure sensitive adhesives) bekannt.

Derartige Schmelzklebstoffe müssen ferner Kohäsionseigenschaften aufweisen, die beim Öffnen der damit beschichteten Verpackungen eine kohäsive Trennung, d.h. eine Trennung innerhalb der Klebstoffschicht mit Verbleib von Klebstoff auf beiden geöffneten Trägermaterialien, begünstigen. Eine adhäsive Trennung, d.h. eine Trennung entlang der Grenzschicht zwischen Klebstoff und Trägermaterial, kann dagegen unerwünscht sein. Die vorliegende Erfindung löst die Aufgabe eine aus drei Schichten bestehende mehrschichtige Folie, nämlich eine äußere Schicht, eine Versiegelungsschicht und eine zwischen der äußeren Schicht und der Versiegelungsschicht liegende Schmelzhaftklebstoffschicht, bereitzustellen, wobei die Schmelzhaftklebstoffschicht einen verbesserten Schmelzklebstoff für die Verwendung in wiederverschließbaren Verpackungen enthält, der die oben beschriebenen Anforderungen erfüllt.

In einem ersten Aspekt betrifft die Erfindung daher eine mehrschichtige Folie, die aus mindestens drei Schichten besteht, die eine äußere Schicht, eine Versiegelungsschicht, und eine zwischen der äußeren Schicht und der Versiegelungsschicht liegende Schmelzhaftklebstoffschicht zum Verkleben der äußeren Schicht und der Versiegelungsschicht umfassen, dadurch gekennzeichnet, dass die Schmelzhaftklebstoffschicht einen Schmelzklebstoff umfasst, enthaltend:
a) 10 bis 40 Gew.-% mindestens eines verzweigten Styrol-Isopren-Styrol BlockCopolymers mit einem prozentualen Gewichtsanteil von Diblöcken am Polymer von weniger als 30 %, vorzugsweise weniger 20 %, und mit einem Schmelzflussindex von weniger als 5g/10 Minuten bei 200°C und einer Prüflast von 5 kg;
b) 0 bis 40 Gew.-%, vorzugsweise 10 bis 20 Gew.-%, mindestens eines Styrolpolymers
   oder eines Styrol Copolymers, insbesondere ausgewählt aus Styrol-Ethylen/Butylen-Styrol (SEBS), Styrol-Ethylen/Propylen-Styrol (SEPS), Styrol-Ethylen-Propylen (SEP), Styrol-Butadien-Styrol (SBS) und Styrol-Isopren/Butadien-Styrol (SIBS) Block-Copolymeren, vorzugsweise mit einem Schmelzflussindex von weniger als 100g/10 Minuten, insbesondere weniger als 20g/10 Minuten, bei 200°C und einer Prüflast von 5 kg;
c) 20 bis 60 Gew.-% mindestens eines klebrig machenden Harzes;
d) 0 bis 15 Gew.-% mindestens eines Weichmachers;
e) 0 bis 16 Gew.-% Additive und Zusatzstoffe ausgewählt aus Stabilisatoren,
Haftvermittler, Füllstoffe oder Pigmente, Wachsen und/oder anderen Polymeren.

Ein weiterer Gegenstand der Erfindung ist eine wiederverschließbare Verpackung, insbesondere für Lebensmittel, die die mehrschichtige Folie enthält.

Sofern in der vorliegenden Anmeldung auf Molekulargewichte Bezug genommen wird, beziehen sich die Angaben, sofern nicht anders angegeben, auf das Gewichtsmittel, d.h. den M_{w}-Wert, und nicht das arithmetische Mittel.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Copolymer" bedeutet somit beispielsweise mindestens eine Art von Copolymer, d.h. dass eine Art von Copolymer oder eine Mischung mehrerer verschiedener Copolymere verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

Die in der mehrschichtige Folie der vorliegenden Erfindung verwendeten Schmelzklebstoffe enthalten mindestens ein kautschukartiges Block-Copolymer, das Styrol enthält, nämlich ein verzweigtes Styrol-Isopren-Styrol (SIS) Block-Copolymer. Dieses weist vorzugsweise radiale und/oder sternförmige Strukturen und einen hohen Verzweigungsgrad auf. Besonders bevorzugt sind sternförmige Polymere mit mehr als 10 Armen. In dem Copolymer beträgt der prozentuale Gewichtsanteil von Diblöcken am Polymer weniger als 30 %, vorzugsweise weniger 20 %, bevorzugt von 5 bis 20 % insbesondere um 15 Gew.-%. Der Schmelzflussindex beträgt weniger als 5g/10 Minuten bei 200°C und einer Prüflast von 5 kg gemessen nach ISO 1133 (Bestimmung der Schmelze-Massefließrate (MFR) und der Schmelze-Volumenfließrate (MVR) von Thermoplasten).

Derartige SIS Block-Copolymere sind in den Schmelzklebstoffen in Mengen von 10 bis 40 Gew.-% vorzugsweise 20-35 Gew.-% enthalten.

Die für den erfindungsgemäßen Schmelzklebstoff geeigneten Copolymere können einzeln eingesetzt werden, es ist auch möglich, mehrere, insbesondere zwei Copolymere gemeinsam einzusetzen. Dabei ist eine Verträglichkeit der Copolymere gegeben.

Zusätzlich zu dem SIS Block-Copolymer, kann der Schmelzklebstoff weitere Styrol-haltige, kautschukartige Polymere oder Copolymere enthalten, welche von den genannten verzweigten Styrol-Isopren-Styrol Block-Copolymeren a) verschieden sind. Dabei handelt es sich um lineare, radiale oder sternförmige Styrolpolymere oder Styrol Copolymere. Letztere werden vorzugsweise ausgewählt aus Styrol-Ethylen/Butylen-Styrol (SEBS), Styrol-Ethylen/Propylen-Styrol (SEPS), Styrol-Ethylen-Propylen (SEP), Styrol-Butadien-Styrol (SBS) und Styrol-Isopren/Butadien-Styrol (SIBS) Block-Copolymeren. Bevorzugt sind lineare Styrolpolymere oder Styrol Copolymere zusätzlich enthalten, besonders bevorzugt lineare SEBS-Polymere Diese zusätzlichen Styrol-haltigen Polymere haben vorzugsweise einen Schmelzflussindex von weniger als 100g/10 Minuten, insbesondere weniger als 20g/10 Minuten, bei 200°C und einer Prüflast von 5 kg, gemessen nach ISO 1133.

Diese zusätzlichen Styrolpolymere sind optionale Inhaltsstoffe und in Mengen von 0 bis 40, vorzugsweise 5- 40 Gew.-%, bevorzugt 10-20 Gew.-% bezogen auf den Klebstoff enthalten.

Es ist in verschiedenen Ausführungsformen bevorzugt, dass die in der mehrschichtigen Folie der vorliegenden Erfindung verwendeten Schmelzklebstoffe insgesamt 45 Gew.-% oder weniger der oben definierten Styrol-haltigen Polymere, insbesondere der Styrol-haltigen Block-Copolymere enthalten.

Weiterhin enthält ein erfindungsgemäßer Schmelzklebstoff mindestens ein Harz. Das Harz soll das Basispolymer klebrig machen. Es wird im Allgemeinen in einer Menge von 20 bis 60 Gew.-% eingesetzt, insbesondere 35 bis 60 Gew.-%.

Es können im Prinzip die bekannten Harze, wie beispielsweise aromatische, aliphatische oder cycloaliphatische Kohlenwasserstoffharze, jeweils auch in voll oder teilweise hydrierter Form, sowie modifizierte oder hydrierte Naturharze eingesetzt werden. Geeignete im Rahmen der Erfindung anwendbare Harze sind z.B. Terpen-Harze, wie Terpolymere oder Copolymere des Terpens, Naturharze auf Kolophonium- oder Tallharzbasis inklusive ihrer Derivate, wie beispielsweise ihrer Pentaerythrol- oder Gylcerinester, andere modifizierte Naturharze wie Harzsäuren aus Balsamharz, Tallharz oder Wurzelharz, ggf. auch Hydroabietylalkohol und seine Ester, Acrylsäure-Copolymerisate, wie Styrol-Acrylsäure-Copolymere oder Copolymerisate aus Ethylen, Acrylatestern und Maleinsäureanhydrid, oder Harze auf Basis funktioneller Kohlenwasserstoffharze. Diese sind teilweise auch als Additive oder Zusatzstoffe einsetzbar.

Bei dem mindestens einen klebrig machenden Harz kann es sich um ein einzelnes Harz oder bevorzugt eine Harzmischung handelt.

In verschiedenen Ausführungsformen umfasst das Harz ein voll- oder teilhydriertes Kohlenwasserstoffharz und/oder mindestens ein Naturharz auf Kolophonium- oder Tallharzbasis oder eines Pentaerythrol- oder Gylcerinesters davon. Das mindestens eine voll- oder teilhydrierte Kohlenwasserstoffharz kann insbesondere ein aromatisch modifiziertes Harz, ein Polyterpen, ein Terpen-Phenolharz, ein 1,3-Pentadienharz, ein Cyclopentadienharz, ein 2-Methyl-2-Buten-Copolymer oder ein Derivat der vorgenannten umfassen.

Bevorzugte Harzzusammensetzungen, die in den erfindungsgemäßen Schmelzklebstoffen Anwendung finden, enthalten:
i) 0-20 Gew.-% eines voll- oder teilhydrierten Kohlenwasserstoffharzes, insbesondere eines aromatisch modifizierten Harzes, eines Polyterpens, eines Terpen-Phenolharzes, eines 1,3-Pentadienharzes, eines Cyclopentadienharzes, eines 2-Methyl-2-Buten-Copolymers oder eines Derivats der vorgenannten, mit einem Erweichungspunkt von 0 bis 50 °C, vorzugsweise 8 bis 12 °C; und/oder
ii) 20-60 Gew.-%, vorzugsweise 35-55 Gew.-%, eines voll- oder teilhydrierten Kohlenwasserstoffharzes, insbesondere eines aromatisch modifizierten Harzes, eines Polyterpens, eines Terpen-Phenolharzes, eines 1,3-Pentadienharzes, eines Cyclopentadienharzes, eines 2-Methyl-2-Buten-Copolymers oder eines Derivats der vorgenannten, mit einem Erweichungspunkt von 80 bis 150 °C; und/oder
iii) 20-60 Gew.-% eines Naturharzes auf Kolophonium- oder Tallharzbasis oder eines Pentaerythrol- oder Gylcerinesters davon oder eines voll- oder teilhydrierten Kohlenwasserstoffharzes, insbesondere eines Polyterpens, eines Terpen-Phenolharzes, eines Cyclopentadienharzes oder eines Derivats der vorgenannten, mit einem Erweichungspunkt von 80 bis 140 °C, insbesondere 95 bis 105 °C.

Besonders bevorzugte Harze sind Kohlenwasserstoffharze, insbesondere Mischungen von aromatisch modifizierten Kohlenwasserstoffharzen gemäß ii) in Mengen von 30-50 Gew.-% bezogen auf den Klebstoff und 10-15 Gew.-% eines aromatisch modifizierten, hydrierten Kohlenwasserstoffharzes gemäß i).

Eine beispielhafte Mischung besteht aus aromatisch modifizierten C5 Kohlenwasserstoffharzen mit einem Erweichungspunkt zwischen 95 und 105 °C, wie sie beispielsweise unter dem Handelsnamen Wingtack™ Extra Flakes (Cray Valley, USA) kommerziell erhältlich sind, und aromatisch modifizierten, hydrierten, bei Raumtemperatur flüssigen C9 Kohlenwasserstoffharzen, wie sie beispielsweise unter dem Handelsnamen Regalite™ R (Eastman, USA) kommerziell erhältlich sind.

Der Erweichungspunkt wird mit der Ring & Ball Methode (ASTM-Methode E28; ISO 4625) bestimmt.

Ein weiterer Bestandteil, der in dem erfindungsgemäßen Schmelzklebstoff enthalten sein kann, sind Weichmacher. Diese können ausgewählt werden aus Mineralölen, Poly(iso)butylen, flüssigen oder pastösen hydrierten Kohlenwasserstoffen und niedermolekularen Polyolefinen. Geeignete Weichmacher umfassen, sind aber nicht beschränkt auf medizinische Weißöle, naphtenische Mineralöle, Polypropylen-, Polybutylen-, Polyisopren-Oligomere, hydrierte Polyisopren- und/oder Polybutadien-Oligomere, Benzoatester, Phthalate, Adipate, pflanzliche oder tierische Öle und deren Derivate. Hydrierte Weichmacher werden beispielsweise ausgewählt aus der Gruppe der paraffinischen Kohlenwasserstofföle. Auch Polypropylenglykol und Polybutylenglykol, sowie Polymethylenglykol sind geeignet. Es können auch Ester als Weichmacher eingesetzt werden, z. B. flüssige Polyester und Glycerinester. Dabei soll das Molekulargewicht von Polyalkylenglykolen oder Polybutylenoligomeren vorzugsweise im Bereich 200 bis 6 000 g/mol liegen, Polyolefine sollten ein Molekulargewicht bis etwa 2000 g/mol aufweisen, insbesondere bis 1000g /mol. Insbesondere sind Weißöle, mineralischen Öle, Poly(iso)butylene und flüssige oder pastöse hydrierte Kohlenwasserstoffe geeignet. Ganz besonders bevorzugt ist Polyisobutylen mit einem Molekulargewicht Mw kleiner 5000.

Die Menge an Weichmachern sollte zwischen 0 bis 15 Gew.-% betragen. Ein zu hoher Anteil von Weichmachern führt zu verringerten kohäsiven Eigenschaften des Klebstoffs. Vorzugsweise ist kein Weichmacher enthalten.

Weiterhin können 0 bis 16 Gew.-%, bevorzugt 0,5 bis 16 Gew.-% Additive und Zusatzstoffe ausgewählt aus Stabilisatoren, Haftvermittler, Füllstoffe oder Pigmente, Wachsen und/oder anderen Polymeren in dem erfindungsgemäßen Schmelzklebstoff enthalten sein. Gegebenenfalls können dem Schmelzklebstoff Wachse in Mengen von 0,5 bis 5 Gew.-% zugegeben werden. Die Menge ist dabei so bemessen, dass einerseits die Viskosität auf den gewünschten Bereich abgesenkt wird, andererseits aber die Adhäsion nicht negativ beeinflusst wird. Das Wachs kann natürlichen, ggf. auch in chemisch modifizierter Form, oder synthetischen Ursprungs sein. Als natürliche Wachse können pflanzliche Wachse, tierische Wachse, Mineralwachse oder petrochemische Wachse eingesetzt werden. Als chemisch modifizierte Wachse können Hartwachse wie Montanesterwachse, Sasolwachse usw. eingesetzt werden. Als synthetische Wachse finden Polyalkylenwachse sowie Polyethylenglykolwachse Verwendung. Vorzugsweise werden petrochemische Wachse wie Petrolatum, Paraffinwachse, mikrokristalline Wachse sowie synthetische Wachse eingesetzt. Besonders bevorzugt sind paraffinische und/oder mikrokristalline Wachse und/oder hydrierter Versionen davon, insbesondere Polypropylen- oder Polyethylenwachs mit einem Tropfpunkt bestimmt nach ASTM D-3954 von 130 bis 170°C.

Die erfindungsgemäßen Schmelzklebstoffe können neben den oben genannten Bestandteilen noch weitere, üblicherweise in Schmelzklebstoffen eingesetzte Bestandteile als Additive enthalten. Hierzu zählen beispielsweise Stabilisatoren, Haftvermittler, Antioxidantien, Füllstoffe und/oder Pigmente. Damit können bestimmte Eigenschaften des Klebstoffs, wie z. B. Kohäsion, Stabilität, Haftung oder Festigkeit beeinflusst werden. Die Menge der Additive und Zusatzstoffe kann vorzugsweise 0 bis 3 Gew.-% betragen. Besonders bevorzugte Additive schließen Stabilisatoren gegen thermischen und oxidativen Abbau und Abbau durch UV-Strahlung ein.

Additive, wie Stabilisatoren oder Haftvermittler sind dem Fachmann bekannt. Es sind kommerzielle Produkte und der Fachmann kann sie entsprechend den gewünschten Eigenschaften auswählen. Dabei ist darauf zu achten, dass eine Verträglichkeit mit der Polymermischung gegeben ist.

Als optionalen Bestandteil kann der erfindungsgemäße Schmelzklebstoff 0 bis 8 Gew.-%, insbesondere 2 bis 5 Gew.-%, von weiteren gegenüber den erfindungsgemäßen Copolymeren unterschiedlichen Polymeren enthalten. Insbesondere soll die Menge dieser Polymere weniger als die erfindungsgemäß notwendigen Mengen der erfindungsgemäßen Blockcopolymeren betragen. Diese Polymere können verschiedene anwendungstechnische Eigenschaften des Schmelzklebstoffs verbessern, z. B. Wärmestandfestigkeit, Kälteflexibilität, Kohäsion und Haftung des aufgetragenen Klebstoffs. Diese weiteren Polymere weisen vorzugsweise keine unter den Herstell- und Lagerbedingungen vernetzenden Gruppen auf.

In weiteren Ausführungsformen kann der Schmelzklebstoff daher zusätzlich mindestens ein elastisches Polymer auf Basis von Olefinen und (Meth)acrylsäureestern enthalten, das Carboxylgruppen und/oder Anhydridgruppen aufweist. Die Olefinmonomere können aus den bekannten C₂ bis C₅-Olefinen ausgewählt werden, insbesondere Ethylen oder Propylen. Die (Meth)acrylsäureester werden aus (Meth)Acrylestern mit niedermolekularen C₁ bis C₈-Alkanoten ausgewählt, insbesondere sind Methyl(meth)acrylat, Ethyl(meth)acrylat, Propyl(meth)acrylat, Butyl(meth)acrylat oder 2-Ethylhexyl(meth)acrylat einzeln oder im Gemisch geeignet. Das Copolymere muss noch Carboxylgruppen und/oder Anhydridgruppen aufweisen. Das kann durch Polymerisation mit entsprechenden funktionellen Monomeren geschehen oder durch nachträgliche Modifikation der Polyolefincopolymere. Beispielsweise ist es möglich, durch Oxidation COOH-Gruppen einzuführen. Weiterhin ist es möglich, durch radikalische Pfropfungsreaktionen, beispielsweise mit Maleinsäureanhydrid, COOH- oder Anhydrid-Gruppen in das Polymere einzuführen. Besonders bevorzugt sind Terpolymere aus Ethylen, Acrylsäureester und Maleinsäureanhydrid mit einem Schmelzflussindex von 100-300/10 Minuten bei 190°C und einer Prüflast von 2,6 kg (ISO 1133).
Derartige Polymere weisen üblicherweise ein Molekulargewicht (Mn) zwischen 3000 und 50000 g/mol aufweisen, insbesondere 8000 bis 25000 g/mol. Die Menge der COOH-/ Anhydrid-Gruppen beträgt insbesondere zwischen 1 bis 100 mg KOH/g betragen, besonders bevorzugt zwischen 5 bis 50 mg KOH/g. Ist die Anzahl der Carboxylgruppen hoch, so ist die Verträglichkeit der Bestandteile des Schmelzklebstoffs problematisch. Der Erweichungspunkt kann im Bereich von 50°C bis 150°C liegen, insbesondere von 90 bis 110°C. Die Menge der COOH-Gruppen tragenden Polymerisats sollte zwischen 0 bis 15 Gew.-% betragen insbesondere zwischen 0,5 bis 10 Gew.-%. Geeignete Carboxylgruppen aufweisende Polymerisate sind kommerziell erhältlich und dem Fachmann bekannt.

Ein weiteres Beispiel für elastische Polymere sind Ethylen/Propylen-Copolymere. Es handelt sich dabei um bekannte statistische Copolymere.

Während die elastischen Polymere die Flexibilität des Schmelzklebstoffs beeinflussen, kann die Kohäsion durch Anteile an zusätzlichen, nicht flexiblen thermoplastischen Polymeren verbessert werden. Insbesondere sind die bekannten thermoplastischen Polymere, wie EVA, hochmolekulare Polyolefine, wie Poly-1-Buten, geeignet.

Ebenfalls als weitere Polymer-Modifikatoren geeignet sind aromatisch modifizierte Kohlenwasserstoffharze und/oder Fischer-Tropsch Wachse mit einem Schmelzpunkt von vorzugsweise 90-110°C.

Der erfindungsgemäße Schmelzklebstoff wird durch bekannte Verfahren durch Mischen in der Schmelze hergestellt. Dabei können alle Komponenten gleichzeitig vorgelegt, erwärmt und dann homogenisiert werden, oder es werden zuerst die leichter schmelzenden Komponenten vorgelegt und gemischt, danach die weiteren Harzbestandteile zugegeben. Es ist auch möglich und bevorzugt, den Schmelzklebstoff kontinuierlich in einem Extruder herzustellen. Der geeignete Schmelzklebstoff ist fest und, bis auf Verunreinigungen, frei von Lösemitteln.

Der erfindungsgemäß geeignete Schmelzklebstoff weist vorzugsweise eine Viskosität von etwa 50000 mPas oder mehr auf, insbesondere von ungefähr 70000 mPas, gemessen bei 220°C (Brookfield CAP, Spindel 8). Es ist ferner bevorzugt, dass er einen Erweichungspunkt (Ring & Ball, ASTM E 28) von mehr als 100°C, insbesondere mehr als 120°C aufweist.

Die hohe Viskosität ist erforderlich, damit der Schmelzklebstoff auch bei erhöhter Temperatur noch gut extrudierbar ist.
Die hierin beschriebenen Schmelzklebstoffe sind als Schmelzhaftklebstoffschicht zum Verkleben von folienförmigen Substraten geeignet, wie in der erfindungsgemäßen mehrschichtigen Folie, und/oder in einer wiederverschließbaren Verpackung mit selbstklebender Vorrichtung.

Derartige Verpackungen bestehen üblicherweise aus mehrschichtigen Folien, die aus mindestens drei Schichten bestehen, nämlich einer äußeren Schicht, einer Versiegelungsschicht, und einer zwischen der äußeren Schicht und der Versiegelungsschicht liegende Schmelzhaftklebstoffschicht zum Verkleben der äußeren Schicht und der Versiegelungsschicht, wobei die Schmelzhaftklebstoffschicht den Schmelzklebstoff gemäß der Erfindung enthält oder daraus besteht.

Die äußere Schicht und die Versiegelungsschicht können aus einem beliebigen geeigneten Material bestehen, beispielsweise auf Basis von Polyolefinen oder Polyestern. Beispiele für geeignete Materialien, wobei auch Mischungen davon geeignet sind, schließen ein, ohne darauf beschränkt zu sein: EVA, gepfropftes EVA, beispielsweise mit Maleinsäureanhydrid, HEA, etc., EMA, PE, Metallocen-PE, gepfropftes PE, gepfropftes PP, lonomer, etc. Das Material kann ferner Füllstoffe, Antioxidantien, Gleitmittel, etc. enthalten, die der Folie die gewünschten Eigenschaften verleihen.

Vorzugsweise besteht die äußere Schicht aus Polyethylen (PE) oder Polyethylenterephthalat, vorzugsweise PE. Dabei kann die äußere PE-Schicht wiederum mit einer weiteren aufliegenden Schicht, beispielsweise einer (bedruckten) PET-Schicht fest verklebt sein, zum Beispiel mittels eines PU-Klebstoffs. Die Versiegelungsschicht besteht vorzugsweise aus PE, insbesondere einem PE niedriger Dichte (LDPE), vorzugsweise einer Dichte von 0,91-0,94 g/cm³, und/oder einem hohen Schmelzflußindex.

Um solche mehrschichtigen Folien herzustellen können verschiedene Techniken und Verfahren zum Einsatz kommen. Geeignet sind beispielsweise das Druckbeschichten, das Koextrusionsbeschichten, die Flachfolien-Koextrusion und die Blasfolien-Koextrusion (s.a. Plastics Extrusion Technology, Friedhelm Hensen (Herausgeber), Carl Hanser Verlag München, 1988).

Um zur Koextrusion eingesetzt werden zu können, liegen die erfindungsgemäßen Klebstoffe üblicherweise in Form von Granulat vor, das selbst mittels Extrusion bei erhöhter Temperatur und anschließendem Schneiden, insbesondere Strangschnitt (nach Abkühlung, beispielsweise mittels kaltem Wasser) hergestellt wurde. Die einzelnen Granulatkörner können danach mit einem (mineralischen) Füllstoff umhüllt werden.
Bei der Herstellung der mehrschichtigen Folie der Erfindung wird der erfindungsgemäße heißschmelzbare selbstklebende Klebstoff vorzugsweise in Granulatform zwischen mindestens 2 thermoplastische Materialien koextrudiert, beispielsweise durch Blasfolien-Extrusion, um eine mindestens dreischichtige Folie zu erhalten, welche eine Seite aufweist, die sich zum Versiegeln eignet und vorzugsweise schneidbar oder reißbar ist, während die andere zur Herstellung einer Verpackung geeignet und beispielsweise mit einer weiteren Folie verbindbar ist.

Beispielhafte dreischichtige Folien dieser Art weisen eine Versiegelungsschicht auf, die schneidbar ist und eine Dicke von 10 bis 100 µm vorzugsweise 10 bis 30 µm, aufweist, eine Schmelzklebstoffschicht wie hierin beschrieben mit einer Dicke von 10 bis 30 µm vorzugsweise 15 bis 20 µm, und eine äußere Schicht, die beispielsweise mit einer weiteren Schicht oder Folie verbindbar ist, und eine Dicke von 10 bis 100, vorzugsweise 10 bis 30 µm aufweist.

Die mehrschichtigen Folien können mit einer weiteren, beispielsweise nicht zur Versiegelung geeigneten Folie kaschiert werden, um dem Verpackungsendprodukt bestimmte mechanische Eigenschaften, Sperrwirkungen, Eigenschaften hinsichtlich des Bedruckens, etc. zu verleihen. Die Deckfolie kann beispielsweise wie oben erwähnt aus PET bestehen, aber auch metallisiertes PET, OPP, OPA, CPA, PVC, APET, PAN, etc. sind geeignet.

Ein Aspekt der Erfindung richtet sich auf solche wiederverschließbaren Verpackungen, insbesondere für Lebensmittel, die die beschriebenen mehrschichtigen Folien enthalten.

Die Verpackung kann die Form eines Beutels oder einer Schale haben. Dabei kann die mehrschichtige Folie auf sich selbst oder eine geeignete Unterlage heißgesiegelt werden. Die Verpackung, die auf diese Weise erhalten wurde, bleibt bei der Handhabung geschlossen. Bei der Erstöffnung der Verpackung wird die Versiegelungsschicht dann derart aufgebrochen, dass im Siegelbereich der Klebstoff an der Oberfläche zum Vorschein kommt und kann dann durch einfaches Andrücken mit der Hand im Bereich der ursprünglichen Schweißverbindung wieder geschlossen werden. Die Öffnungs- und Schließvorgänge sind mehrmals aufeinanderfolgend möglich, wobei die Kohäsionskraft des Klebstoffs ausreicht, auch hierbei für eine gute Wiederverschließbarkeit zu sorgen.

Die Verpackungen, die derart hergestellt werden, lassen sich für zahlreiche Anwendungen einsetzen: Lebensmittelverpackungen, insbesondere für Käse, Wurst und solche, die vor dem Verzehr im Ofen oder der Mikrowelle erwärmt werden. Weiterhin eignen sich solche Verpackungen für Medikamente, Hygienetücher, Reinigungstücher, etc., wobei die Tücher mit Reinigungsemulsionen oder kosmetisch wirksamen Substanzen versetzt sein können.

Die folgenden Beispiele dienen der Erläuterung der Erfindung, die Erfindung ist aber nicht darauf beschränkt.

### Beispiele

### Beispiel 1: Klebstoffformulierung

Es wurde eine Klebstoffzusammensetzung hergestellt, die bezogen auf die Zusammensetzung die folgenden Bestandteile enthielt:

| | |
|---|---|
| Kraton HT 1200 KT (Fa. Kraton), sternförmiges SIS-Block-Copolymer | 30 Gew.-% |
| Kraton G 1657 (Fa. Kraton) lineares SEBS-Triblock-Copolymer | 15 Gew.-% |
| Regalite R1010 (Fa. Eastman), aromatisch funkt., hydriertes C9 KW-Harz | 15 Gew.-% |
| Wingtack Extra (Fa. Sartomer), aromatisch funkt., C5 KW-Harz | 40 Gew.-% |

Dieser Klebstoff wies eine Viskosität von etwa 70000 mPas bei 220°C (Brookfield CAP, Spindel 8) und einen Erweichungspunkt von größer als 120°C (ASTM E 28) auf. Er eignete sich zur Herstellung wiederverschließbarer Verpackungen, die bei Verwendung eines 20 µm dicken Klebstofffilms beim ersten Öffnen eine Verbundhaftung von ca. 6N/15mm aufwiesen. Beim Wiederverschließen und erneuten Öffnen wurden Verbundhaftungen von mindestens 2 N/15mm erreicht.

## Patentansprüche

1. Mehrschichtige Folie, die aus mindestens drei Schichten besteht, die eine äußere Schicht, eine Versiegelungsschicht, und eine zwischen der äußeren Schicht und der Versiegelungsschicht liegende Schmelzhaftklebstoffschicht zum Verkleben der äußeren Schicht und der Versiegelungsschicht umfassen, **dadurch gekennzeichnet, dass** die Schmelzhaftklebstoffschicht einen Schmelzklebstoff enthaltend
a) 10 bis 40 Gew.-% mindestens eines verzweigten Styrol-Isopren-Styrol BlockCopolymers mit einem prozentualen Gewichtsanteil von Diblöcken am Polymer von weniger als 30 % und mit einem Schmelzflussindex von weniger als 5g/10 Minuten bei 200°C und einer Prüflast von 5 kg;
b) 0 bis 40 Gew.-%, mindestens eines Styrolpolymers oder eines Styrol Copolymers;
c) 20 bis 60 Gew.-% mindestens eines klebrig machenden Harzes;
d) 0 bis 15 Gew.-% mindestens eines Weichmachers;
e) 0 bis 16 Gew.-% Additive und Zusatzstoffe ausgewählt aus Stabilisatoren, Haftvermittler, Füllstoffe oder Pigmente, Wachsen und/oder anderen Polymeren; umfasst.

2. Mehrschichtige Folie nach Anspruch 1, **dadurch gekennzeichnet, dass** es sich bei dem mindestens einen klebrig machenden Harz des Schmelzklebstoffs um ein Harz oder eine Harzmischung handelt, die mindestens ein voll- oder teilhydriertes Kohlenwasserstoffharz und/oder mindestens ein Naturharz auf Kolophonium- oder Tallharzbasis oder eines Pentaerythrol- oder Gylcerinesters davon umfasst.

3. Mehrschichtige Folie nach Anspruch 1 oder 2, **dadurch gekennzeichnet, dass** das mindestens eine klebrig machende Harz des Schmelzklebstoffs jeweils bezogen auf den Klebstoff umfasst:
a) 0-20 Gew.-% eines voll- oder teilhydrierten Kohlenwasserstoffharzes mit einem Erweichungspunkt von 0 bis 50 °C; und/oder
b) 20-60 Gew.-% eines voll- oder teilhydrierten Kohlenwasserstoffharzes mit einem Erweichungspunkt von 80 bis 150 °C; und/oder
c) 20-60 Gew.-% eines Naturharzes auf Kolophonium- oder Tallharzbasis oder eines Pentaerythrol- oder Gylcerinesters davon oder eines voll- oder teilhydrierten Kohlenwasserstoffharzes mit einem Erweichungspunkt von 80 bis 140 °C.

4. Mehrschichtige Folie nach einem der Ansprüche 1 bis 3, **dadurch gekennzeichnet, dass** der Weichmacher des Schmelzklebstoffs ausgewählt wird aus Mineralölen, Poly(iso)butylen, flüssigen oder pastösen hydrierten Kohlenwasserstoffen und niedermolekularen Polyolefinen.

5. Mehrschichtige Folie nach einem der Ansprüche 1 bis 4, **dadurch gekennzeichnet, dass** die Additive und Zusatzstoffe des Schmelzklebstoffs jeweils bezogen auf den Schmelzklebstoff umfassen:
a) 0,5 bis 5 Gew.-% paraffinische und/oder mikrokristalline Wachse und/oder hydrierter Versionen davon und/oder
b) 0 bis 3 Gew.-% Additive;
c) 0 bis 8 Gew.-%Terpolymere aus Ethylen, Acrylsäureester und Maleinsäureanhydrid mit einem Schmelzflussindex von 100-300/10 Minuten bei 190°C und einer Prüflast von 2,6 kg (ISO 1133), aromatisch modifizierte Kohlenwasserstoffharze und/oder Fischer-Tropsch Wachse mit einem Schmelzpunkt von 90-110°C.

6. Mehrschichtige Folie nach einem der Ansprüche 1 bis 5, **dadurch gekennzeichnet, dass** der Schmelzklebstoff (a) bei 220°C (Brookfield CAP, Spindel 8) eine Viskosität von mehr als 50000 mPas aufweist und/oder (b) einen Erweichungspunkt von mehr als 100°C aufweist.

7. Mehrschichtige Folie nach einem der Ansprüche 1 bis 6, **dadurch gekennzeichnet, dass** die äußere Schicht aus Polyethylen (PE) oder Polyethylenterephthalat, und/oder die Versiegelungsschicht aus PE besteht.

8. Wiederverschließbare Verpackung, insbesondere für Lebensmittel, enthaltend die mehrschichtige Folie nach einem der Ansprüche 1 bis 7.

## Claims

1. A multi-layered film consisting of at least three layers, comprising an outer layer, a sealing layer, and a hot-melt adhesive layer, between the outer layer and the sealing layer, for bonding the outer layer and the sealing layer, **characterized in that** the hot-melt adhesive layer comprises a hot-melt adhesive containing
a) 10 to 40 wt.% of at least one branched styrene-isoprene-styrene block copolymer having a percentual weight proportion by weight of diblocks to the polymer of less than 30% and having a melt flow index of less than 5 g/10 minutes at 200 °C and a test load of 5 kg;
b) 0 to 40 wt.% of at least one styrene polymer or a styrene copolymer;
c) 20 to 60 wt.% of at least one tackifying resin;
d) 0 to 15 wt.% of at least one plasticizer;
e) 0 to 16 wt.% additives and admixtures selected from stabilizers, adhesion promoters, fillers or pigments, waxes and/or other polymers.

2. The multi-layered film according to claim 1, **characterized in that** the at least one tackifying resin of the hot-melt adhesive is a resin or resin mixture comprising at least one fully or partially hydrogenated hydrocarbon resin and/or at least one natural resin based on colophony or tall oil resin or a pentaerythritol or glycerol ester thereof.

3. The multi-layered film according to claim 1 or 2, **characterized in that** the at least one tackifying resin of the hot-melt adhesive comprises, in each case based on the adhesive:
a) 0-20 wt.% of a fully or partially hydrogenated hydrocarbon resin having a softening point of from 0 to 50 °C; and/or
b) 20-60 wt.% of a fully or partially hydrogenated hydrocarbon resin having a softening point of from 80 to 150 °C; and/or
c) 20-60 wt.% of a natural resin based on colophony or tall oil resin or a pentaerythritol or glycerol ester thereof or a fully or partially hydrogenated hydrocarbon resin having a softening point of from 80 to 140 °C.

4. The multi-layered film according to one of claims 1 to 3, **characterized in that** the plasticizer of the hot-melt adhesive is selected from mineral oils, poly(iso)butylene, liquid or pasty hydrogenated hydrocarbons and low-molecular-weight polyolefins.

5. The multi-layered film according to one of claims 1 to 4, **characterized in that** the additives and admixtures of the hot-melt adhesive comprise, in each case based on the hot-melt adhesive:
a) 0.5 to 5 wt.% paraffinic and/or microcrystalline waxes and/or hydrogenated versions thereof and/or
b) 0 to 3 wt.% additives;
c) 0 to 8 wt.% terpolymers of ethylene, acrylic acid ester and maleic anhydride having a melt flow index of 100-300/10 minutes at 190 °C and a test load of 2.6 kg (ISO 1133), aromatically modified hydrocarbon resins and/or Fischer-Tropsch waxes having a melting point of 90-110 °C.

6. The multi-layered film according to one of claims 1 to 5, **characterized in that** the hot-melt adhesive (a) has a viscosity of more than 50,000 mPas at 220 °C (Brookfield CAP, spindle 8) and/or (b) has a softening point of more than 100 °C.

7. The multi-layered film according to one of claims 1 to 6, **characterized in that** the outer layer is made of polyethylene (PE) or polyethylene terephthalate, and/or the sealing layer is made of PE.

8. A resealable packaging, in particular for food, containing the multi-layered film according to one of claims 1 to 7.

## Revendications

1. Film multicouche constitué d'au moins trois couches comprenant une couche extérieure, une couche de scellement et une couche adhésive thermofusible sensible à la pression entre la couche extérieure et la couche de scellement pour coller la couche extérieure et la couche de scellement, **caractérisé en ce que** la couche adhésive thermofusible sensible à la pression comprend un adhésif thermofusible contenant
a) 10 à 40 % en poids d'au moins un copolymère bloc styrène-isoprène-styrène ramifié ayant un pourcentage en poids de diblocs dans le polymère inférieur à 30 % et ayant un indice de viscosité à l'état fondu inférieur à 5 g/10 minutes à 200° C et une charge d'essai de 5 kg ;
b) 0 à 40 % en poids d'au moins un polymère de styrène ou un copolymère de styrène ;
c) 20 à 60 % en poids d'au moins une résine collante ;
d) 0 à 15 % en poids d'au moins un plastifiant ;
e) 0 à 16 % en poids d'additifs et d'adjuvants choisis parmi les stabilisants, les promoteurs d'adhérence, les charges ou pigments, les cires et/ou autres polymères.

2. Film multicouche selon la revendication 1, **caractérisée en ce que** l'au moins une résine collante de l'adhésif thermofusible est une résine ou un mélange de résines comprenant au moins une résine hydrocarbonée entièrement ou partiellement hydrogénée et/ou au moins une résine naturelle à base de colophane ou d'huile de pin ou d'un ester pentaérythrolique ou glycériné de celle-ci.

3. Film multicouche selon la revendication 1 ou 2, **caractérisé en ce que** l'au moins une résine collante de l'adhésif thermofusible comprend, à chaque fois par rapport à l'adhésif :
a) 0 à 20 % en poids d'une résine hydrocarbonée entièrement ou partiellement hydrogénée ayant un point de ramollissement compris entre 0 et 50 °C ; et/ou
b) 20 à 60 % en poids d'une résine hydrocarbonée entièrement ou partiellement hydrogénée ayant un point de ramollissement compris entre 80 et 150 °C ; et/ou
c) 20 à 60 % en poids d'une résine naturelle à base de colophane ou de résine d'huile de pin ou d'un ester pentaérythrolique ou glycériné de celle-ci ou d'une résine hydrocarbonée entièrement ou partiellement hydrogénée ayant un point de ramollissement compris entre 80 et 140 °C.

4. Film multicouche selon l'une quelconque des revendications 1 à 3, **caractérisé en ce que** le plastifiant de l'adhésif thermofusible est choisi parmi les huiles minérales, le poly(iso)butylène, les hydrocarbures hydrogénés liquides ou pâteux et les polyoléfines à bas poids moléculaire.

5. Film multicouche selon l'une quelconque des revendications 1 à 4, **caractérisé en ce que** lesdits additifs et adjuvants dudit adhésif thermofusible comprennent, à chaque fois par rapport à l'adhésif thermofusible :
a) 0,5 à 5 % en poids de cires paraffiniques et/ou microcristallines et/ou de leurs versions hydrogénées ; et/ou
b) 0 à 3 % en poids d'additifs ;
c) 0 à 8 % en poids de terpolymères d'éthylène, d'ester d'acide acrylique et d'anhydride d'acide maléique ayant un indice de viscosité à l'état fondu compris entre 100 et 300 g/10 minutes à 190 °C et une charge d'essai de 2,6 kg (ISO 1133), de résines hydrocarbonées modifiées par voie aromatique et/ou de cires Fischer-Tropsch ayant un point de fusion compris entre 90 et 110° C.

6. Film multicouche selon l'une quelconque des revendications 1 à 5, **caractérisé en ce que** l'adhésif thermofusible a (a) une viscosité supérieure à 50 000 mPas à 220° C (Brookfield CAP, broche 8) et/ou (b) un point de ramollissement supérieur à 100° C.

7. Film multicouche selon l'une quelconque des revendications 1 à 6, **caractérisé en ce que** la couche extérieure est constituée de polyéthylène (PE) ou de polyéthylène téréphtalate et/ou la couche d'étanchéité est constituée de PE.

8. Emballage refermable, en particulier pour denrées alimentaires, contenant le film multicouche selon l'une quelconque des revendications 1 à 7.
